# EUROPEAN PATENT SPECIFICATION

(11) **EP 3 402 968 B1**
(45) Date of publication and mention of the grant of the patent: **12.10.2022**
(21) Application number: 16885287.9
(22) Date of filing: 13.12.2016
(51) Int. Cl.: F01P 9/06, F01P 7/16, F01K 9/00, F01K 23/06, F02G 5/02, F01K 23/10

(54) **A COOLING SYSTEM FOR A COMBUSTION ENGINE AND A WHR SYSTEM**
KÜHLSYSTEM FÜR EINEN VERBRENNUNGSMOTOR UND WHR-SYSTEM
SYSTÈME DE REFROIDISSEMENT DESTINÉ À UN MOTEUR À COMBUSTION ET SYSTÈME DE RÉCUPÉRATION DE CHALEUR PERDUE

(30) Priority: 15.01.2016 SE 1650043
(43) Date of publication of application: 21.11.2018
(73) Proprietor: Scania CV AB, 151 87 Södertälje (SE)
(72) Inventor: HALL, Ola, 117 67 Stockholm (SE); KARDOS, Zoltan, 151 35 Södertälje (SE)
(74) Representative: Scania CV AB
(86) International application number: PCT/SE2016/051255
(87) International publication number: WO 2017/123132

(56) References cited:
- WO-A1-2015/064302
- WO-A1-2015/197091
- DE-A1-102012 209 811
- DE-A1-102014 019 684
- DE-A1-102014 204 257
- US-A1- 2011 048 012
- US-A1- 2012 222 420
- US-A1- 2013 118 423
- US-A1- 2015 361 832

## Description

### BACKGROUND OF THE INVENTION AND PRIOR ART

The present invention relates to a cooling system for a combustion engine and a WHR-system according to the preamble of claim 1.

A WHR system (Waste Heat Recovery System) can be used in vehicles for recovering waste thermal energy and convert it to mechanical energy or electric energy. A WHR system includes a pump which pressurizes and circulates a working medium in a closed circuit. The circuit comprises one or several evaporators where the working medium is heated and evaporated by one or several heat sources such as, for example, the exhaust gases from a combustion engine. The pressurized and heated gaseous working medium is directed to an expander where it expands. The expander generates mechanical energy which can be used to operate the vehicle or apparatuses on the vehicle. Alternatively, the expander is connected to a generator generating electric energy. The working medium leaving the expander is directed to a condenser. The working medium is cooled down in the condenser to a temperature at which it condenses. The liquefied working medium is redirected to the pump which pressurizes the medium. Thus, the waste heat energy from, for example, the exhaust gases from a combustion engine in a vehicle can be recovered by means of a WHR-system. Consequently, a WHR-system can reduce the fuel consumption of a combustion engine.

In order to achieve a high thermal efficiency in a WHR-system, the working medium in the condenser is to be cooled to a condensation temperature as low as possible and substantially without subcooling. Consequently, in order to achieve a high thermal efficiency in a WHR-system, the working medium is to be cooled with a suitable cooling effect. However, the suitable cooling effect of the working medium in the condenser varies during different operating conditions such as with the heat effect supplied from, for example, the exhaust gases to the evaporator. Since the supplied heat from exhaust gases can vary rapidly, it is difficult to continuously provide a cooling effect of the working medium in the condenser resulting in a high thermal efficiency of a WHR-system.

US 2013/0118423 shows a cooling circuit with a circulating coolant which cools a motor. The cooling circuit comprises a cooling line where the coolant cools a working medium in a condenser of a WHR-system and a bypass line leading the medium past the condenser. The coolant flow through the bypass line is controlled by a relief valve which open at a specific pressure.

DE 102014204257 shows a cooling apparatus for a first heat source and a second heat source, comprising a radiator and at least one first coolant pump, a coolant line interconnection being provided between the first heat source, the second heat source and the radiator, a thermostat arrangement with at least two thermostatic valves being provided in the coolant line interconnection to achieve a graded temperature distribution of the coolant.

### SUMMARY OF THE INVENTION

The object of the present invention is to provide a cooling system which is able to provide an adjustment of the cooling effect of a working medium in a condenser of a WHR-system in a quick and simple manner in order to substantially continuously establish a condensation temperature/pressure of the working medium in the condenser at which the WHR system receives a high thermal efficiency.

The above mentioned object is achieved by the vehicle according to the characterized part of claim 1. In this case, the cooling system which cools the combustion engine also is used to cool the working medium in the condenser of the WHR system. Thus, no additional cooling system needs to be used. The cooling effect of the working medium in the condenser is related to the coolant flow rate through the condenser and the coolant temperature. The cooling system comprises a condenser line directing coolant through the condenser and a condenser bypass line directing coolant past the condenser. A valve is arranged in the condenser bypass line. By means of such a valve, it is possible to adjust the flow resistance in the bypass line in relation to the flow resistance in the condenser line and thus the coolant flow rate in the bypass line in relation to the flow rate in the condenser line. No further valves need to be used. The coolant flow rate through the condenser can be adjusted in a quick and reliable manner by means of the valve. It is nearly always possible to provide a coolant flow rate through the condenser which results in a cooling of the working medium in the condenser to a desired condensation temperature/pressure at different operating condition. However, by practical reasons, it is many times suitable to avoid negative pressures in a WHR-system. In this case, it is suitable to obtain a condensation pressure just above 1 bar. The desired pressure range may, for example, be in the range 1, 1 - 1, 5 bar. It is to be noted that a condensation pressure for a working medium has a corresponding condensation temperature.

According to an embodiment of the invention, the condenser bypass line is a part of an engine inlet line. In this case, it is possible to receive cooled coolant from the radiator line and/or non-cooled coolant from the radiator bypass line in the condenser bypass line via relatively short lines. Advantageously, the flow resistance in the condenser bypass line is considerably lower than flow resistance in the condenser line when the valve is in a fully open position. In this case, it is possible to vary the flow resistance in the condenser bypass line in relation to the flow resistance in the condenser line significantly and in a corresponding degree the proportions of the coolant flow through the condenser line and the condenser bypass line. Preferably, the valve is adjustable in a stepless manner. In this case, it is possible to vary the coolant flow rate between the condenser bypass line and the condenser line with a high accuracy.

According to an embodiment of the invention, the radiator bypass line is connected to the condenser bypass line at a first connection point. Such a first connection point facilitates a flow of uncooled coolant from the radiator bypass line to the condenser bypass line. The uncooled coolant in the radiator bypass line has many times a too high temperature for cooling the working medium in the condenser. The radiator line may be connected to the condenser line at a second connection point. Such a second connection point facilitates a flow of cooled coolant from the radiator line to the condenser line. Usually, the coolant leaving the radiator has a temperature which makes it very suitable to cool the working medium in the condenser. The cooling system may comprise a connection line connecting the first connection point and the second connection point. Such a connection line makes it possible direct coolant from the radiator bypass line to the condenser line during certain operating condition and from the radiator line to the condenser bypass line during other operating conditions.

According to an embodiment of the invention, the control unit is, during operating conditions when the thermostat is in the closed position, configured to estimate a desired cooling temperature/pressure of the working medium in the condenser, to calculate a required coolant flow rate at the prevailing coolant temperature to be directed to the condenser at which the working medium receives the desired condensation temperature/pressure, and to adjust the valve such that the calculated coolant flow is directed to the condenser. In this case, the thermostat directs the entire coolant flow rate to the radiator bypass line. The total coolant flow rate in the cooling system can be estimated by means of information about performance data of the coolant pump. The coolant temperature in the radiator bypass line can be measured by a temperature sensor. In this case, it is relatively uncomplicated to calculate the coolant flow rate to be directed to the condenser for cooling the working medium to the desired condensation temperature/pressure.

According to an embodiment of the invention, the control unit is, during operating conditions when the thermostat is in a partly open position, configured to estimate a desired condensation temperature/pressure of the working medium in the condenser, calculate the coolant flow rate in the radiator line and the coolant flow rate in the radiator bypass line, calculate a coolant flow rate and coolant temperature combination at which the working medium in the condenser is cooled to the desired condensation temperature/pressure, and to adjust the valve such that coolant at a calculated flow rate and temperature combination is directed to the condenser line and the condenser. When the thermostat is partly open, it directs a first coolant flow rate to the radiator line and a second coolant flow rate to the radiator bypass line. The first coolant flow rate is at a first temperature when it leaves the radiator and the second coolant flow rate is at a second temperature. When the thermostat is partly open, it is possible to direct a suitable mixture of the first coolant flow rate at the first temperature and the second coolant flow rate at the second temperature to the condenser for cooling the working medium to the desired condensation temperature/pressure. The first temperature and the second temperature of the coolant can be measured by temperature sensors. However, it is complicated and expensive to install flow meters which measures the coolant flow rates in the radiator line and the radiator bypass line with a high accuracy. In order to avoid the installation of flow meters, the cooling effect in the radiator is estimated whereupon the first coolant flow rate through the radiator is calculated. In this case, it is possible to estimate the first coolant flow rate in the radiator with a high accuracy, in a simple manner and to a low cost. The second coolant flow rate can be calculated as the difference between the total coolant flow rate and the first coolant flow rate. The total coolant flow rate in the cooling system can be estimated by means of information about performance data of the coolant pump.

According to an embodiment of the invention, the control unit is, during operating conditions when the thermostat is in the fully open position, configured to estimate a desired cooling temperature/pressure of the working medium in the condenser, to calculate a required coolant flow rate at the prevailing coolant temperature to be directed to the condenser at which the working medium receives the desired condensation temperature/pressure, and to adjust the valve such that the calculated coolant flow is directed to the condenser. In this case, the thermostat directs the entire coolant flow rate to the radiator line. The total coolant flow rate in the cooling system can be estimated by means of information about performance data of the coolant pump. The coolant temperature in the radiator line can be measured by a temperature sensor. In this case, it is also relatively uncomplicated to calculate the coolant flow rate to be directed to the condenser for cooling the working medium to the desired condensation temperature/pressure.

According to an embodiment of the invention, the cooling system may comprise a sensor sensing a parameter related to the actual condensing temperature/pressure of the working medium in condenser. A condition for enabling adjustment of the actual condensation temperature/pressure to a desired temperature/pressure during different operating conditions is to receive information about the actual condensation temperature/pressure. Such a sensor may sense the pressure or the temperature in the condenser. Alternatively, it may sense the temperature of the coolant leaving the condenser. The temperature of the coolant leaving the condenser is strongly related to the condensation temperature. The control unit may be configured to estimate an actual condensation temperature of the working medium in condenser by means of said parameter, to compare the actual condensation temperature with a desired condensation temperature at the actual operating condition, and to control the valve in order to eliminate a possible difference between the actual condensation temperature and the desired condensation temperature. The control unit may have access to stored values of desired condensation temperatures/pressures at different operating conditions.

According to an embodiment of the invention, the working medium in the WHR-system is ethanol. Ethanol has an evaporation temperature of about 78°C at 1 bar. It is relatively easy to accomplish a coolant temperature at a suitable level below the evaporation temperature of ethanol and cool the ethanol in a condenser to a condensation temperature just above 78°C. However, it is possible to use other working mediums such as for example R245fa.

According to an embodiment of the invention, the working medium is heated in an evaporator of the WHR-system by means of exhaust gases from the combustion engine. The exhaust gases from a combustion engine contains a lot of heat energy, which usually is supplied to the environment. By means of a WHR-system, it is possible to recover a large part of the heat energy in the exhaust gases.

### BRIEF DESCRIPTION OF THE DRAWING

In the following a preferred embodiment of the invention is described, as an example, with reference to the attached drawing, in which:

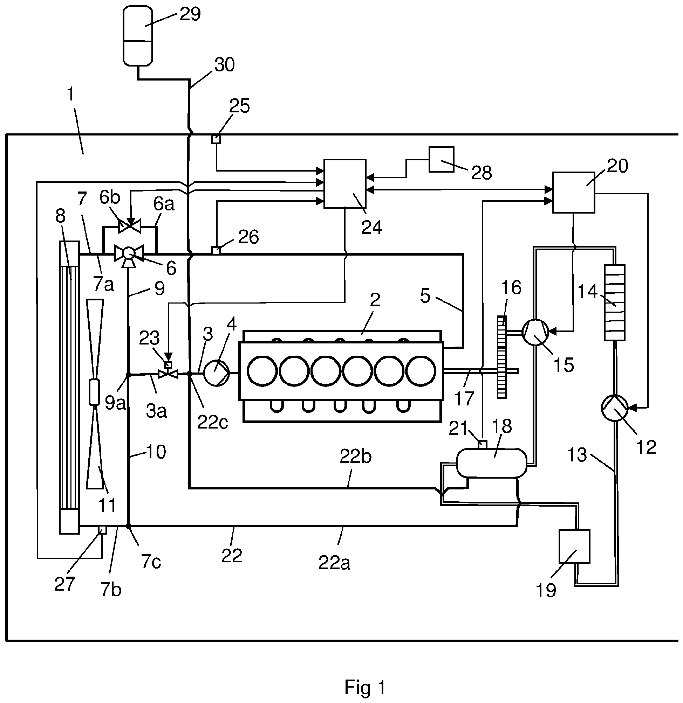

- Fig. 1: shows a cooling system according to a preferred embodiment of the invention.

### DETAILED DESCRIPTION OF A PREFERRED EMBODIMENT OF THE INVENTION

Fig. 1 shows a combustion engine 2 powering a schematically disclosed vehicle 1. The combustion engine 2 may be a diesel engine. The vehicle 1 may be a heavy vehicle. The vehicle 1comprises a cooling system comprising an engine inlet line 3 provided with a pump 4 circulating a coolant in the cooling system. The pump 4 provides a coolant flow rate m through the combustion engine 2. When the coolant has circulated through the combustion engine 2, it is received in an engine outlet line 5. A thermostat 6 is arranged at an end of the engine outlet line 5. The thermostat 6 receives a coolant flow range m at a temperature t₂. The cooling system comprises a radiator line 7 directing coolant through a radiator 8. The radiator line 7 comprises a radiator inlet line 7a, and a radiator outlet line 7b. The cooling system comprises a radiator bypass line 9 directing coolant past the radiator 8. The radiator bypass line 9 and the radiator outlet line 7b is connected to each other via a connection line 10. The connection line 10 is connected to the radiator bypass line 9 via a first connection point 9a and to the radiator outlet line 7b via a second connection point 7c.

The thermostat 6 is closed when the coolant temperature t₂ is lower than a regulating temperature of the thermostat 6. In the closed position, the thermostat 6 directs the entire coolant flow rate m to the radiator bypass line 9. However, it is possible to direct a part of the coolant flow rate in the engine outlet line 5 to the radiator line 7 via a thermostat bypass line 6a. The coolant flow rate through the thermostat bypass line 6a is regulated by a valve 6b. The thermostat 6 is partly open when the coolant temperature t₂ is within a somewhat higher temperature range than the regulating temperature. In the partly open position, the thermostat 6 directs a first part ṁ₁ of the coolant flow rate to the radiator line 7 and a second part ṁ₂ of the coolant flow rate to the radiator bypass line 9. In case the coolant has a higher temperature than the highest temperature of said temperature range at which the thermostat 6 is partly open, the thermostat 6 is fully open. In the fully open position, the thermostat 6 directs the entire coolant flow range m to the radiator line 7. The ram air and a radiator fan 11 provide a cooling air flow through the radiator 8. The coolant is cooled to a temperature t₁ in the radiator 8.

The vehicle is provided with a WHR-system (Waste Heat Recovery system). The WHR- system comprises a pump 12 which pressurized and circulates a working medium in a closed a circuit 13. In this case, the working medium is ethanol. However, it is possible to use other kinds of working mediums such as for example R245fa. The pump 12 pressurizes and circulates the working medium to an evaporator 14. The working medium is heated in the evaporator 14, for example, by exhaust gases from the combustion engine. The working medium is heated in the evaporator 14 to a temperature at which it evaporates. The working medium is circulated from the evaporator 14 to the expander 15.

The pressurised and heated working medium expands in the expander 15. The expander 15 generates a rotary motion which may be transmitted, via a suitable mechanical transmission 16, to a shaft 17 of the power train of the vehicle 1. Alternatively, the expander 15 may be connected to a generator transforming mechanical energy into electrical energy. The electrical energy may be stored in a battery. After the working medium has passed through the expander15, it is directed to a condenser 18. The working medium is cooled in the condenser 18 by coolant from the cooling system to a temperature at which it condenses. The working medium is directed from the condenser 18 to a receiver 19. The pump 12 sucks working medium from the bottom of the receiver 19 ensuring that only working medium in a liquid state is supplied to the pump 12. A first control unit 20 controls the operation of the WHR-system. The first control unit 20 controls the operation of the pump 12 and the expander 15. The WHR-system makes it possible to transform thermal energy from the exhaust gases to mechanical energy or electrical energy.

The temperature of exhaust gases and thus the heating effect of the working medium in the evaporator 14 varies during different operation conditions. In order to maintain a substantially continuously high thermal efficiency in the WHR-system, the working medium in the condenser 18 is to be cooled with an adjustable cooling effect. It is favourable to establish a condensation pressure as low as possible at the different operating conditions. However, it is suitable to avoid negative pressure in the WHR-system by practical reasons. In view of these facts, it is suitable to provide a cooling of the working medium in the condenser 18 to a condensation pressure just above 1bar. Consequently, in order to maintain a high thermal efficiency it is necessary to adjust the cooling effect of the working medium in the condenser 18 in view of the supplied heat energy from the exhaust gases such that the condensation pressure will be just above 1 bar. The working medium ethanol has a condensation temperature of 78°C at 1 bar. In this case, it is suitable to accomplish a condensation temperature of just above 78°C in the condenser 18.

The cooling system comprises a condenser line 22 directing coolant through the condenser 18. The condenser line 22 comprises a condenser inlet line 22a directing coolant to the condenser 18. The condenser inlet line 22a receives coolant from the radiator outlet line 7b and/or the connection line 10 via the second connection point 7c. The condenser line 22 comprises a condenser outlet line 22b directing coolant from the condenser 18 to a third connection point 22c with the engine inlet line 3. The third connection point is arranged in a position downstream of a valve 23 arranged in the engine inlet line 3 and upstream of the pump 4. The part of the engine inlet line 3 which is arranged between the first connection point 9a and the third connection point 22c defines a condenser bypass line 3a. The valve 23 provides an adjustable flow resistance in a stepless manner for the coolant in the condenser bypass line 3a. The condenser line 22 provides a constant flow resistance for the coolant. By means of the valve 23, which may be a throttle vale, it is possible adjust the flow resistances in the condenser bypass line 3a in relation to the constant flow resistance in the condenser line 22 and thus an adjustable coolant flow rate ṁ₄ through the condenser bypass line 3a in relation to a coolant flow rate ṁ₃ through the condenser line 22.

A second control unit 24 controls the valve 6 and the valve 23. A first temperature sensor 25 senses the ambient temperature. A second temperature sensor 26 senses the temperature t₂ of the coolant in the engine outlet line 5. A third temperature sensor 27 senses the temperature t₁ of the coolant in the radiator outlet line 7b. The second control unit 24 receives substantially continuously information from said temperature sensors 25-27 about actual temperatures. The second control unit 24 also receives information from the first control unit 20 about the operating condition of the WHR system. Furthermore, the second control unit 24 receives information about operation parameters 28 of the vehicle such as vehicle speed and the speed of the radiator fan 11. The second control unit 24 has access to stored information about performance data of the radiator 8 at varying air flows. An expansion tank 29 is connected to the engine inlet line 3 in a position downstream of the valve 23 and upstream of the pump 4 via a static line 30. A temperature senor 21 or a pressure sensor senses the condensation temperature or the condensation pressure in the condenser 18.

During operation, the control unit 24 receives information about relevant operating parameters of the vehicle 1. The operating parameters include the velocity of the vehicle 1 and the speed of the radiator fan 11. The operating parameters may also include engine load and temperature of the exhaust gases. Furthermore, the control unit 24 receives information about relevant operating parameters of the WHR system. The control unit 24 receives, for example, information from the temperature sensor 21 about the actual condensation temperature Tₐ in the condenser 18. The control unit 24 estimates a desired condensation temperature of the working medium in the condenser 18. When ethanol is used as working medium, a condensation temperature of about 80°C is desirable during most operating conditions. The control unit 24 estimates the required cooling effect Q_{c} of the working medium in the condenser 18 at which the working medium receives the desired condensation temperature T.

The control unit 24 receives information about the coolant temperature t₂ in the engine outlet line 5. At operating conditions when the coolant temperature t₂ in the engine outlet line 5 is lower than the regulating temperature of the thermostat 6, the control unit 24 notes that the thermostat 6 is in a closed position. In case the valve 6b is closed, the entire coolant flow rate m at the temperature t₂ to the radiator bypass line 9. The control unit 24 receives information about the temperature t₂ of the coolant directed to the condenser 18 and the required cooling effect Q_{c} in the condenser. Furthermore, the control unit 24 has access to necessary parameters such as the heat capacity of the coolant and the working medium and performance data of the condenser 18. In view of this fact, it is possible for the control unit 24 to calculate the required coolant flow rate ṁ₃ at the temperature t₂ to be directed to the condenser 18 in order to cool the working medium in the condenser 18 with the estimated cooling effect Q_{c} at which the working medium condenses at the desired condensation temperature T.

Thereafter, the control unit 24 regulates the valve 23 such that it provides a flow resistance in the condenser bypass line 3a at which the coolant flow rate m in the radiator bypass line 9 is divided in a coolant flow rate ṁ₃, via the connection line 10, to the condenser line 22 and a remaining coolant flow rate ṁ₄ through the condenser bypass line 3a. The remaining coolant flow rate ṁ₄ = ṁ- ṁ₃. The control unit 24 receives information from the temperature sensor 21 about the actual condensation temperature Tₐ. The control unit 24 compares the actual condensation temperature Tₐ with the desired condensation temperature T. In case there is a difference between the actual condensation temperature Tₐ and the desired condensation temperature T, the control unit 24 provides a further valve adjustment in order to eliminate such a possible difference.

During operating condition when the coolant temperature t₂ in the engine outlet line 5 is relatively high but lower than the regulating temperature of the thermostat 6, it is not suitable to direct the coolant at the temperature t₂ to the condenser 18. In this case, it is possible for the control unit 24 to open the valve 6b such that a part of the coolant flow rate ṁ in the engine outlet line 5 is directed to the radiator 10. This measure makes it possible to direct coolant with a lower temperature than t₂ to the condenser 18.

If instead the coolant temperature t₂ in the engine outlet line 5 is within the temperature range where the thermostat 6 is partly open, the thermostat 6 directs a first part ṁ₁ of the coolant flow rate to the radiator line 7 and a second part ṁ₂ of the coolant flow rate to the radiator bypass line 9. The first part ṁ₁ of the coolant flow rate is cooled to the temperature t₁ in the radiator 8. The control unit 24 estimates the cooling effect Qᵣ in the radiator 8 by means of performance data of the radiator 8 at varying air flows and the air temperature. The air flow through the radiator 8 is estimated by means of information of the velocity of vehicle 1 and the speed of the radiator fan 11. The control unit 24 receives information from the temperature sensor 25 about the temperature of the ambient air. The control unit 24 calculates the coolant flow rate ṁ₁ through the radiator 8 according to the formula Qᵣ = ṁ₁ · cₚ· (t₂-t₁). The cooling effect Qᵣ in the radiator has been estimated above, cₚ is the heat capacity of the coolant, t₂ is received from the temperature sensor 27 and t₁ is received from the temperature sensor 27. Thus, the coolant flow range ṁ₁ through the radiator 8 is calculable since it is the only unknown parameter in the formula. The coolant flow rate ṁ₂ through the radiator bypass line 9 can be calculated as ṁ₂= ṁ- ṁ₁, where m is the total coolant flow in the cooling system which is defined by the pump 4.

The control unit 24 has now information about the flow rate ṁ₁ and temperature t₁ of the coolant in the radiator line 7 and information about the flow rate ṁ₂ and temperature t₂ of the coolant in the radiator bypass line 9. In this case, the entire coolant flow rate ṁ₁ at the temperature t₁ is directed from the radiator outlet line 7b to the condenser line 22 and the condenser 18. However, it is possible to introduce a variable amount of the coolant flow rate ṁ₂ at the temperature t₂ from the radiator bypass line 9, via the connection line 10, to the condenser line 22 by means of the valve 23. The control unit 24 calculates possible coolant flow rate ṁ₃ and temperature t₃ combinations which provide the required cooling effect Q_{c} in the condenser at which the working medium is condensed at the desired condensation temperature T. During some operating conditions the number of such combinations can be relatively large. Combinations with a too small coolant flow rate ṁ₃ to the condenser 18 can be excluded. The control unit 24 selects the most favorable combination of coolant flow rate ṁ₃ and coolant temperature t₃ to be directed to the condenser 18. The control unit 24 performs an adjustment of the valve 23 and the flow resistance in the condenser bypass line 3a in order to direct coolant with the selected combination of coolant flow rate ṁ₃ and coolant temperature t₃ to the condenser line 22 and the condenser 18.

The control unit 24 receives information from the temperature sensor 21 about the actual condensation temperature Tₐ in the condenser 18. The control unit 24 compares the actual condensation temperature Tₐ with the desired condensation temperature T. If there is a difference between the actual condensation temperature Tₐ and the desired condensation temperature T, the control unit 24 performs a further adjustment of the valve 23 in order to eliminate such a possible difference.

If instead the coolant temperature t₂ in the engine outlet line 5 is higher than the highest temperature in said temperature range in which the thermostat 6 is partly open, the thermostat 6 is fully open and it directs the entire coolant flow rate m from the engine outlet line 5 to the radiator line 7 and the radiator 8. The control unit 24 calculates the required coolant flow rate ṁ₃ at the temperature t₁ to be directed to the condenser 18 in order to cool the working medium in the condenser 18 with the estimated cooling effect Q_{c} at which the working medium condenses at the desired condensation temperature T. In this case, the control unit 24 receives information about the coolant temperature t₁ from the temperature sensor 27. Furthermore, the control unit 24 has access to necessary parameters such as the heat capacity cₚ of the coolant and the working medium and performance data of the condenser 18. In view of this fact, it is possible for the control unit 24 to calculate the required coolant flow rate ṁ₃ at the temperature t₁ to be directed to the condenser 18.

The control unit 24 regulates the valve 23 such that it provides a flow resistance in the condenser bypass line 3a at which the coolant flow rate m in the radiator line 7 is divided in a coolant flow rate ṁ₃ through the condenser line 22 and a remaining coolant flow rate ṁ₄, via the connection line 10, to the condenser bypass line 3a. The control unit 24 receives information from the temperature sensor 21 about the actual condensation temperature Tₐ. The control unit 24 compares the actual condensation temperature Tₐ and the desired condensation temperature T. In case there is a difference between the desired condensation temperature T and the actual condensation temperature Tₐ, the control unit 24 provides a further valve adjustment in order to eliminate such a possible difference.

The invention is not restricted to the described embodiment but may be varied freely within the scope of the claims.

## Claims

1. A vehicle (1) comprising a combustion engine, a WHR-system, and a cooling system, wherein the cooling system comprises
- a radiator line (7) directing coolant through a radiator (8) in which the coolant is cooled to a first temperature (t₁),
- a radiator bypass line (9) directing coolant past the radiator (8),
- a condenser line (22) receiving coolant from the radiator line (7) and/or the radiator bypass line (9) and directing the coolant through a condenser (18) of the WHR system,
- a condenser bypass line (3a) receiving coolant from the radiator line (7) and/or the radiator bypass line (9) and directing the coolant past the condenser (18),
- a thermostat (6) receiving a coolant flow range (m) at a second temperature (t₂), wherein the thermostat (6) in a closed position directs the entire coolant flow range (m) to the radiator bypass line (9), in a partly open position directs a first coolant flow range ṁ₁) to the radiator line (7) and a second coolant flow range (ṁ₂) to the radiator bypass line (9), and in a fully open position directs the entire coolant flow rate (m) to the radiator line (7), wherein the cooling system comprises
- a valve (23) arranged in the condenser bypass line (3a) by which it is possible to adjust the flow resistances in the condenser bypass line (3a) in relation to the flow resistance in the condenser line (22) and thus the coolant flow rate (ṁ₄) through the condenser bypass line (3a) in relation to the coolant flow rate (ṁ₃) through the condenser line (22) and
- a control unit (24) configured to control the valve (23) such that the coolant directed to the condenser (18) has a temperature and a flow rate which results in a cooling of the working medium in the condenser (18) to a desired condensation temperature/pressure at the actual operating condition,
**characterized in that** the control unit (24) is, during operating conditions when the thermostat (6) is in a partly open position, configured to estimate a desired cooling temperature (T) of the working medium in the condenser (18), calculate the coolant flow rate (ṁ₁) through the radiator line (7) and the coolant flow rate (ṁ₂) through the radiator bypass line (9), calculate a coolant flow rate (ṁ₃) and coolant temperature (t₃) combination at which the medium in the condenser (18) is cooled to the desired temperature (T), and to adjust the valve (23) such that coolant at the selected flow rate (ṁ₃) and temperature (t₃) combination is directed to the condenser line (22) and the condenser (18).

2. A vehicle (1) according to claim 1, **characterized in that** the bypass line (3a) is a part of an engine inlet line (3).

3. A vehicle (1) according to claim 2, **characterized in that** the bypass line (3a) is arranged in an upstream position of a pump (4) in the engine inlet line (3).

4. A vehicle (1) according to any one of the preceding claims, **characterized in that** the valve (23) is adjustable in a stepless manner.

5. A vehicle (1) according to any one of the preceding claims, **characterized in that** the radiator bypass line (9) is connected to the condenser bypass line (3a) at a first connection point (9a).

6. A vehicle (1) according to any one of the preceding claims, **characterized in that** the radiator line (7) is connected to the condenser line (22) at a second connection point (7c).

7. A vehicle (1) according to claim 5 and 6, **characterized in that** it comprises a connection line (10) connecting the first connection point (9a) and the second connection point (7c).

8. A vehicle (1) according to any one of the preceding claims, **characterized in that** the control unit (24) is, during operating conditions when the thermostat (6) is in the closed position, configured to estimate a desired cooling temperature (T) of the working medium in the condenser (18), to calculate a required coolant flow rate (ṁ₃) at the temperature (t₂) to be directed to the condenser (18) at which the medium receives the desired temperature (T), and to adjust the valve (23) such that the calculated coolant flow (ṁ₃) is directed to the condenser (18).

9. A vehicle (1) according to any one of the preceding claims 1-7, **characterized in that** the control unit (24) is, during operating conditions when the thermostat (6) is in the fully open position, configured to estimate a desired cooling temperature (T) of the working medium in the condenser (18), to calculate a required coolant flow rate (ṁ₃) at the temperature (t₁) to be directed to the condenser (18) at which the medium receives the desired temperature (T), and to adjust the valve (23) such that the calculated coolant flow rate (ṁ₃) is directed to the condenser (18).

10. A vehicle (1) according to any one of the preceding claims, **characterized in that** it comprises a sensor (21) sensing a parameter related to the actual condensation temperature/pressure of the working medium in the condenser (18)

11. A vehicle (1) according to any one of the preceding claims, **characterized in that** the working medium in the condenser is ethanol.

## Patentansprüche

1. Fahrzeug (1) mit einem Verbrennungsmotor, einem Abwärmerückgewinnungssystem (waste heat recovery (WHR) system) und einem Kühlsystem, wobei das Kühlsystem umfasst
- eine Kühlerleitung (7), die Kühlmittel durch einen Kühler (8) leitet, in dem das Kühlmittel auf eine erste Temperatur (t₁) gekühlt wird,
- eine Kühlerumgehungsleitung (9), die Kühlmittel an dem Kühler (8) vorbeileitet,
- eine Kondensatorleitung (22), die Kühlmittel aus der Kühlerleitung (7) und/oder der Kühlerumgehungsleitung (9) aufnimmt und das Kühlmittel durch einen Kondensator (18) des WHR-Systems leitet,
- eine Kondensatorumgehungsleitung (3a), die Kühlmittel aus der Kühlerleitung (7) und/oder der Kühlerumgehungsleitung (9) aufnimmt und das Kühlmittel an dem Kondensator (18) vorbeileitet,
- einen Thermostat (6), der einen Kühlmitteldurchflussbereich (m) bei einer zweiten Temperatur (t₂) aufnimmt, wobei der Thermostat (6) in einer geschlossenen Stellung den gesamten Kühlmitteldurchflussbereich (m) zu der Kühlerumgehungsleitung (9) leitet, in einer teilweise geöffneten Stellung einen ersten Kühlmitteldurchflussbereich (m₁) zu der Kühlerleitung (7) und einen zweiten Kühlmitteldurchflussbereich (m₂) zu der Kühlerumgehungsleitung (9) leitet und in einer vollständig geöffneten Stellung den gesamten Kühlmitteldurchfluss (m) zu der Kühlerleitung (7) leitet, wobei das Kühlsystem umfasst
- ein in der Kondensatorumgehungsleitung (3a) angeordnetes Ventil (23), mit dem die Strömungswiderstände in der Kondensatorumgehungsleitung (3a) in Bezug auf den Strömungswiderstand in der Kondensatorleitung (22) und damit der Kühlmitteldurchfluss (ṁ₄) durch die Kondensatorumgehungsleitung (3a) in Bezug auf den Kühlmitteldurchfluss (ṁ₃) durch die Kondensatorleitung (22) eingestellt werden können, und
- eine Steuereinheit (24), die dazu eingerichtet ist, das Ventil (23) derart zu steuern, dass das zum Kondensator (18) geleitete Kühlmittel eine Temperatur und einen Durchfluss aufweist, die zu einer Kühlung des Arbeitsmediums in dem Kondensator (18) auf eine gewünschte Kondensationstemperatur/einen gewünschten Kondensationsdruck bei der aktuellen Betriebsbedingung führen,
**dadurch gekennzeichnet, dass** die Steuereinheit (24) unter Betriebsbedingungen, wenn sich der Thermostat (6) in einer teilweise geöffneten Stellung befindet, dazu eingerichtet ist, eine gewünschte Kühltemperatur (T) des Arbeitsmediums in dem Kondensator (18) zu schätzen, den Kühlmitteldurchfluss (m₁) durch die Kühlerleitung (7) und den Kühlmitteldurchfluss (m₂) durch die Kühlerumgehungsleitung (9) zu berechnen, eine Kombination von Kühlmitteldurchfluss (ṁ₃) und Kühlmitteltemperatur (t₃) zu berechnen, bei der das Medium in dem Kondensator (18) auf die gewünschte Temperatur (T) gekühlt wird, und das Ventil (23) derart einzustellen, dass Kühlmittel mit der gewählten Kombination von Durchfluss (ṁ₃) und Temperatur (t₃) zu der Kondensatorleitung (22) und zu dem Kondensator (18) geleitet wird.

2. Fahrzeug (1) nach Anspruch 1, **dadurch gekennzeichnet, dass** die Umgehungsleitung (3a) ein Teil einer Motoreinlassleitung (3) ist.

3. Fahrzeug (1) nach Anspruch 2, **dadurch gekennzeichnet, dass** die Umgehungsleitung (3a) in einer stromaufwärts gelegenen Position einer Pumpe (4) in der Motoreinlassleitung (3) angeordnet ist.

4. Fahrzeug (1) nach einem der vorhergehenden Ansprüche, **dadurch gekennzeichnet, dass** das Ventil (23) stufenlos einstellbar ist.

5. Fahrzeug (1) nach einem der vorhergehenden Ansprüche, **dadurch gekennzeichnet, dass** die Kühlerumgehungsleitung (9) an einem ersten Verbindungspunkt (9a) mit der Kondensatorumgehungsleitung (3a) verbunden ist.

6. Fahrzeug (1) nach einem der vorhergehenden Ansprüche, **dadurch gekennzeichnet, dass** die Kühlerleitung (7) an einem zweiten Verbindungspunkt (7c) mit der Kondensatorleitung (22) verbunden ist.

7. Fahrzeug (1) nach Anspruch 5 und 6, **dadurch gekennzeichnet, dass** es eine Verbindungsleitung (10) umfasst, die den ersten Verbindungspunkt (9a) und den zweiten Verbindungspunkt (7c) verbindet.

8. Fahrzeug (1) nach einem der vorhergehenden Ansprüche, **dadurch gekennzeichnet, dass** die Steuereinheit (24) dazu eingerichtet ist, unter Betriebsbedingungen, wenn sich der Thermostat (6) in der geschlossenen Stellung befindet, eine gewünschte Kühltemperatur (T) des Arbeitsmediums in dem Kondensator (18) zu schätzen, einen erforderlichen Kühlmitteldurchfluss (m₃) bei der Temperatur (t₂) zu berechnen, der zu dem Kondensator (18) zu leiten ist, bei dem das Medium die gewünschte Temperatur (T) bekommt, und das Ventil (23) derart einzustellen, dass der berechnete Kühlmitteldurchfluss (m₃) zu dem Kondensator (18) geleitet wird.

9. Fahrzeug (1) nach einem der vorhergehenden Ansprüche 1-7, **dadurch gekennzeichnet, dass** die Steuereinheit (24) dazu eingerichtet ist, unter Betriebsbedingungen, wenn sich der Thermostat (6) in der vollständig geöffneten Stellung befindet, eine gewünschte Kühltemperatur (T) des Arbeitsmediums in dem Kondensator (18) abzuschätzen, einen erforderlichen Kühlmitteldurchfluss (m₃) bei der Temperatur (t₁) zu berechnen, der zu dem Kondensator (18) zu leiten ist, bei dem das Medium die gewünschte Temperatur (T) bekommt, und das Ventil (23) derart einzustellen, dass der berechnete Kühlmitteldurchfluss (m₃) zu dem Kondensator (18) geleitet wird.

10. Fahrzeug (1) nach einem der vorhergehenden Ansprüche, **dadurch gekennzeichnet, dass** es einen Sensor (21) umfasst, der einen Parameter erfasst, der mit der tatsächlichen Kondensationstemperatur/dem tatsächlichen Kondensationsdruck des Arbeitsmediums in dem Kondensator (18) zusammenhängt.

11. Fahrzeug nach einem der vorhergehenden Ansprüche, **dadurch gekennzeichnet, dass** es sich bei dem Arbeitsmedium in dem Kondensator um Ethanol handelt.

## Revendications

1. Véhicule (1) comprenant un moteur à combustion, un système WHR et un système de refroidissement, le système de refroidissement comprenant
- une conduite de radiateur (7) dirigeant du liquide de refroidissement à travers un radiateur (8) dans lequel le liquide de refroidissement est refroidi à une première température (t₁),
- une conduite de dérivation de radiateur (9) dirigeant du liquide de refroidissement au-delà du radiateur (8),
- une conduite de condenseur (22) recevant du liquide de refroidissement depuis la conduite de radiateur (7) et/ou la conduite de dérivation de radiateur (9) et dirigeant le liquide de refroidissement à travers un condenseur (18) du système WHR,
- une conduite de dérivation de condenseur (3a) recevant du liquide de refroidissement depuis la conduite de radiateur (7) et/ou la conduite de dérivation de radiateur (9) et dirigeant le liquide de refroidissement au-delà du condenseur (18),
- un thermostat (6) recevant une plage d'écoulement de liquide de refroidissement (m) à une deuxième température (t₂), dans lequel le thermostat (6) dans une position fermée dirige l'intégralité de la plage d'écoulement de liquide de refroidissement (m) vers la conduite de dérivation de radiateur (9), dans une position partiellement ouverte, dirige une première plage d'écoulement de liquide de refroidissement (m₁) vers la conduite de radiateur (7) et une deuxième plage d'écoulement de liquide de refroidissement (m₂) vers la conduite de dérivation de radiateur (9), et dans une position complètement ouverte, dirige l'intégralité du débit de liquide de refroidissement (m) vers la conduite de radiateur (7), dans lequel le système de refroidissement comprend
- une vanne (23) disposée dans la conduite de dérivation de condenseur (3a) permettant d'ajuster les résistances à l'écoulement dans la conduite de dérivation de condenseur (3a) en fonction de la résistance à l'écoulement dans la conduite de condenseur (22) et donc le débit de liquide de refroidissement (m₄) à travers la conduite de dérivation de condenseur (3a) en fonction du débit de liquide de refroidissement (m₃) à travers la conduite de condenseur (22) et
- une unité de commande (24) configurée pour commander la vanne (23) de telle sorte que le liquide de refroidissement dirigé vers le condenseur (18) a une température et un débit qui résulte en un refroidissement du milieu de travail dans le condenseur (18) à une température/pression de condensation souhaitée en condition de fonctionnement réelle,
**caractérisé en ce que** l'unité de commande (24) est, dans des conditions de fonctionnement lorsque le thermostat (6) est dans une position partiellement ouverte, configuré pour estimer une température de refroidissement souhaitée (T) du fluide de travail dans le condenseur (18), calculer le débit de liquide de refroidissement (m₁) à travers la ligne de radiateur (7) et le débit de liquide de refroidissement (m₂) à travers la ligne de dérivation de radiateur (9), calculer une combinaison de débit de liquide de refroidissement (m₃) et de température de liquide de refroidissement (t₃) à laquelle le milieu dans le condenseur (18) est refroidi à la température souhaitée (T), et pour ajuster la vanne (23) de telle sorte que le liquide de refroidissement à la combinaison de débit (m₃) et de température (t₃) sélectionnée soit dirigé vers la conduite de condenseur (22) et le condenseur (18).

2. Véhicule (1) selon la revendication 1, **caractérisé en ce que** la conduite de dérivation (3a) fait partie d'une conduite d'entrée (3) de moteur.

3. Véhicule (1) selon la revendication 2, **caractérisé en ce que** la conduite de dérivation (3a) est agencé dans une position en amont d'une pompe (4) dans la conduite d'entrée (3) de moteur.

4. Véhicule (1) selon l'une quelconque des revendications précédentes, **caractérisé en ce que** la vanne (23) est réglable de manière continue.

5. Véhicule (1) selon l'une quelconque des revendications précédentes, **caractérisé en ce que** la conduite de dérivation de radiateur (9) est raccordée à la conduite de dérivation de condenseur (3a) au niveau d'un premier point de raccordement (9a).

6. Véhicule (1) selon l'une quelconque des revendications précédentes, **caractérisé en ce que** la conduite de radiateur (7) est raccordée à la conduite de condenseur (22) au niveau d'un deuxième point de raccordement (7c).

7. Véhicule (1) selon les revendications 5 et 6, **caractérisé en ce qu'**il comprend une ligne de connexion (10) reliant le premier point de connexion (9a) et le deuxième point de connexion (7c).

8. Véhicule (1) selon l'une quelconque des revendications précédentes, **caractérisé en ce que** l'unité de commande (24) est, dans des conditions de fonctionnement lorsque le thermostat (6) est en position fermée, configuré pour estimer une température de refroidissement souhaitée (T) du milieu de travail dans le condenseur (18), pour calculer un débit de liquide de refroidissement requis (m₃) à la température (t₂) à diriger vers le condenseur (18) auquel le milieu reçoit la température souhaitée (T), et pour ajuster la vanne (23) de telle sorte que le flux de liquide de refroidissement calculé (m₃) est dirigé vers le condenseur (18).

9. Véhicule (1) selon l'une quelconque des revendications 1 à 7, **caractérisé en ce que** l'unité de commande (24) est, dans des conditions de fonctionnement lorsque le thermostat (6) est dans une position complètement ouverte, configuré pour estimer une température de refroidissement souhaitée (T) du milieu de travail dans le condenseur (18), pour calculer un débit de liquide de refroidissement requis (m₃) à la température (t₁) à diriger vers le condenseur (18) auquel le milieu reçoit la température souhaitée (T), et pour ajuster la vanne (23) de telle sorte que le débit de liquide de refroidissement calculé (m₃) est dirigé vers le condenseur (18).

10. Véhicule (1) selon l'une quelconque des revendications précédentes, **caractérisé en ce qu'**il comprend un capteur (21) détectant un paramètre lié à la température/pression de condensation réelle du fluide de travail dans le condenseur (18).

11. Véhicule (1) selon l'une quelconque des revendications précédentes, **caractérisé en ce que** le liquide de travail dans le condenseur est de l'éthanol.
